# EUROPÄISCHE PATENTSCHRIFT

(11) **EP 3 085 610 B1**
(45) Veröffentlichungstag und Bekanntmachung des Hinweises auf die Patenterteilung: **17.04.2019**
(21) Anmeldenummer: 16166528.6
(22) Anmeldetag: 22.04.2016
(51) Int. Cl.: B62K 19/30, B62M 6/90

(54) **FAHRZEUGRAHMEN, INSBESONDERE FAHRRADRAHMEN MIT EINEM UNTERROHR**
VEHICLE FRAME, IN PARTICULAR BICYCLE FRAME WITH A DOWN TUBE
CHASSIS DE VEHICULE, EN PARTICULIER CADRE DE VELO COMPRENANT UN TUBE INFERIEUR

(30) Priorität: 24.04.2015 DE 202015003010 U
(43) Veröffentlichungstag der Anmeldung: 26.10.2016
(73) Patentinhaber: Derby Cycle Werke GmbH, 49661 Cloppenburg (DE)
(72) Erfinder: Schliewert, Frank, 49661 Cloppenburg (DE)
(74) Vertreter: Jabbusch, Matthias

(56) Entgegenhaltungen:
- EP-A1- 2 230 164
- DE-A1-102013 204 556
- DE-U1-202014 005 639
- DE-U1-202014 009 732

## Beschreibung

Die Erfindung betrifft einen Fahrzeugrahmen, insbesondere einen Fahrradrahmen mit Rahmenrohren, insbesondere mit einem Sitzrohr und einem Unterrohr, wobei mindestens ein Rahmenrohr zumindest eine Halterung für einen Energiespeicher aufweist, mindestens eine Halterung als eine Aussparung mindestens eines Rahmenrohres ausgebildet ist, das Rahmenrohr mindestens eine, die Aussparung zumindest abschnittsweise begrenzende, Begrenzungsfläche aufweist, das Rahmenrohr eine, die Aussparung zumindest abschnittsweise begrenzende, Anlegekante aufweist, und mindestens eine Begrenzungsfläche mindestens einen Klemmvorsprung aufweist.

Fahrzeugrahmen, insbesondere Fahrradrahmen mit Halterungen zur Aufnahme mindestens eines Energiespeichers, insbesondere eines Akkumulators, kommen vielfach, insbesondere bei Elektrofahrrädern, wie beispielsweise Pedelecs, S-Pedelecs, E-Bikes oder ähnlichen zur Verwendung. Ein zum Betrieb benötigter Akkumulator kann an einem Rahmenrohr, beispielsweise an dem Unterrohr, mittels eines Halters befestigt werden, so dass der Akkumulator leicht zu entnehmen ist und der Bewegungsablauf, beispielsweise beim Fahren eines Pedelecs, nicht behindert wird. Von besonderer Wichtigkeit bei der Befestigung eines Akkumulators an einem Fahrradrahmen ist, dass es auch bei Fahrt über unebenes Gelände nicht zu einem Lösen des Akkumulators von dem Fahrradrahmen kommen kann. Eine vielfach zur Verwendung kommende Befestigungsmethode ist die Befestigung mittels Rastverbindungen. Diese beinhalten allerdings zumeist den Nachteil, dass die Rastverbindungen ein Spiel des Akkumulators gegen den Fahrradrahmen aufweisen, so dass es zu einer störenden Geräuschentwicklung, insbesondere zu Klappergeräuschen, kommen kann.

Beispielsweise ist aus der DE 10 2013 204 556 A1 ein Fahrrad mit integrierter Kabelführung mit einem Rahmen mit einem länglich hohlen Rahmenelement beschrieben, wobei eine innere Oberfläche des Rahmenelementes eine Längsnut mit einer Nutbreite definiert und mit einem Kabel, dass in der Längsnut angeordnet ist, wobei das Kabel eine Kabelbreite aufweist, die geringer als die Nutbreite ist.

Weiterhin ist aus der EP 2 230 164 A1 ein Fahrradrahmen zur Aufnahme einer Batterieeinheit mit einer zugehörigen Batterieeinheit bekannt. Der Fahrradrahmen weist einen Rohrabschnitt mit einem Innenraum zur Aufnahme mindestens einer Batterieeinheit auf. In dem Rohrabschnitt ist eine im Wesentlichen in seiner Erstreckungsrichtung verlaufende Seitenöffnung ausgebildet, durch welche die Batterieeinheit in den Innenraum einfügbar ist. An einem Ende des Innenraumes kann hierbei eine Schwenkachse angeordnet sein, an welche die Batterieeinheit koppelbar ist und nach dem Ankoppeln in Richtung des Innenraumes schwenkbar ist.

Des Weiteren ist aus der DE 20 2014 009 732 U1 ein Halteelement für einen Akkumulator sowie ein Rohrelement und ein Fahrradrahmen mit dem Halteelement beschrieben.

Des Weiteren soll sich ein befestigter Akkumulator an dem Fahrradrahmen in den optischen Gesamteindruck des Fahrrades einfügen. Hierbei ist insbesondere eine Einpassung des Akkumulators in die Rohrgeometrie des Fahrradrahmens von Vorteil.

Der Erfindung liegt die Aufgabe zugrunde, einen Fahrradrahmen der eingangs genannten Gattung aufzuzeigen, durch den eine sichere und optisch unauffällige Aufnahme eines Energiespeichers ermöglicht ist.

Die Lösung der Aufgabe erfolgt mit einem Fahrzeugrahmen mit den Merkmalen des Patentanspruchs 1. Weiterbildungen und vorteilhafte Ausgestaltungen sind in den jeweiligen Unteransprüchen angegeben.

Bei einem Fahrzeugrahmen, insbesondere einem Fahrradrahmen mit Rahmenrohren, insbesondere mit einem Sitzrohr und einem Unterrohr, wobei mindestens ein Rahmenrohr zumindest eine Halterung für mindestens einen Energiespeicher aufweist, mindestens eine Halterung als eine Aussparung mindestens eines Rahmenrohres ausgebildet ist, das Rahmenrohr mindestens eine, die Aussparung zumindest abschnittsweise begrenzende, Begrenzungsfläche aufweist, das Rahmenrohr eine, die Aussparung zumindest abschnittsweise begrenzende, Anlegekante aufweist und mindestens eine Begrenzungsfläche mindestens einen Klemmvorsprung aufweist ist erfindungswesentlich vorgesehen, dass mindestens ein Klemmvorsprung als eine kurvenförmige Führungsschiene zur kurvenförmigen Führung mindestens eines Gegenstückes eines Energiespeichers ausgebildet ist. Bei dem Energiespeicher kann es sich insbesondere um einen wiederaufladbaren Speicher für elektrische Energie, beispielsweise um einen handelsüblichen Akkumulator für Pedelecs, Elektrofahrräder, E-Bikes oder ähnliches, handeln. Auch die Verwendung anderer Energiespeicherelemente, wie beispielsweise nicht wiederaufladbare Batterien, ist denkbar. Vorzugsweise ist der verwendete Akkumulator länglich, beispielsweise annähernd zylindrisch, aufgebaut und kann zwei Stirnseiten bzw. Grundflächen und eine Mantelfläche aufweisen. Der Fahrzeugrahmen, insbesondere ein Fahrradrahmen für ein Pedelec oder ein S-Pedelec, weist Rahmenrohre auf, beispielsweise ein Unterrohr, das beispielsweise das Steuerrohr des Fahrradrahmens mit dem Sitzrohr bzw. dem Tretlagergehäuse verbindet. Das Unterrohr ist vorzugsweise so stabil ausgeführt, dass die Stabilität des Fahrradrahmens durch eine vorhandene Aussparung nicht negativ beeinflusst ist. Die Aussparung in einem Rahmenrohr kann beispielsweise durch ein aus dem Rahmenrohr ausgenommenes Volumen oder einen ausgenommenen Rohrabschnitt gegeben sein, wobei das Rahmenrohr mindestens ein, insbesondere zwei Begrenzungsflächen aufweist. Begrenzungsflächen begrenzen die Aussparung abschnittsweise und sind beispielsweise senkrecht zur Oberfläche des Rahmenrohres angeordnet. Die Aussparung wird somit abschnittsweise von den beiden Begrenzungsflächen sowie einseitig von dem verbleibenden Anteil des Unterrohres umgeben. Beispielsweise kann eine Kantenlänge der Begrenzungsflächen zwei Drittel des Innenrohrdurchmessers des Rahmenrohres betragen, während die senkrecht dazu stehende Kante der Begrenzungsfläche dem Durchmesser des Rahmenrohres in dieser Dimension entsprechen kann. Vorzugsweise ist ein von dem Rahmenrohr aufzunehmender Akkumulator so ausgebildet, dass er bündig zur Oberfläche des Rahmenrohres in die Aussparung einpassbar ist und sich somit optisch in die Form des vorhandenen Rahmenrohres einfügt. Zumindest eine Begrenzungsfläche, die die Aussparung abschnittsweise begrenzt, weist mindestens einen Klemmvorsprung auf. Ein Klemmvorsprung kann beispielsweise in Form einer kurvenförmigen Führungsschiene ausgebildet sein. Insbesondere können die Begrenzungsflächen jeweils einen Klemmvorsprung aufweisen. Entsprechend kann die Energiespeichereinrichtung, insbesondere ein Akkumulator, Gegenstücke an seinen Stirnseiten aufweisen. Zur zumindest abschnittsweisen Aufnahme des Akkumulators in die Aussparung des Fahrradrahmens kann der Akkumulator an eine Anlegekante des Fahrradrahmens angelegt werden. Die Anlegekante verläuft dabei beispielsweise parallel zur äußeren Kontur des Rahmenrohres und der Akkumulator kann eine an die Anlegekante angepasste Form aufweisen. Durch ein Annähern einer nicht angelegten Kante des Akkumulators an die freie Anlegekante, insbesondere durch ein Drehen des Akkumulators um eine durch die erste Anlegekante ausgebildete Drehachse, wird der Akkumulator abschnittsweise in die Aussparung des Rahmenrohres aufgenommen. Insbesondere können dabei die Gegenstücke des Akkumulators als Gleitstücke ausgebildet sein, die beim Einschwenken des Akkumulators zumindest abschnittsweise entlang der Klemmvorsprünge der Begrenzungsflächen gleiten. Die Klemmvorsprünge sind dabei so ausgebildet, dass der Akkumulator in seiner eingeschwenkten Stellung zwischen der Anlegekante und den Klemmvorsprüngen verklemmt bzw. verspannt ist. Durch diese Verklemmung ist der Akkumulator spielfrei in dem Rahmenrohr gehalten, so dass es auch bei einer Fahrt über unebenes Gelände nicht zur Entwicklung von störenden Geräuschen, insbesondere von Klappergeräuschen, kommt.

Ein Klemmvorsprung ist als eine kurvenförmige Führungsschiene zur kurvenförmigen Führung mindestens eines Gegenstückes ausgebildet. Die Begrenzungsflächen weisen insbesondere Führungsschienen auf, durch die entsprechende Gegenstücke des Akkumulators, die in die Führungsschiene fassen, kurvenförmig geführt werden können. Beispielsweise kann ein Akkumulator an seinen Stirnseiten als Vorsprünge ausgebildete Gegenstücke aufweisen, die in die Führungsschiene fassen können. Diese Gegenstücke können insbesondere als Gleitstücke ausgebildet sein, die abschnittsweise durch die Führungsschienen gleiten können. Zur abschnittsweisen Aufnahme eines Akkumulators in die Aussparung eines Rahmenrohres wird der Akkumulator an eine lange Kante, insbesondere eine Anlegekante der Aussparung, angelegt und so um die Anlegekante geschwenkt, dass die Gegenstücke in die Führungsschienen der Stirnseiten der Aussparung fassen. Insbesondere können die Gegenstücke eine an die Form der Führungsschienen angepasste Formgebung aufweisen. Durch die kurvenförmige Form der Führungsschienen wird der Akkumulator seitlich in die Aussparung des Rahmenrohres verschwenkt.

In einer Weiterbildung des Fahrzeugrahmens weist mindestens eine Führungsschiene zwei seitliche Wandungen auf, die Wandungen sind zumindest abschnittsweise parallel zueinander angeordnet, die Wandungen weisen eine endständige Verbindung zueinander auf und die Wandungen weisen zumindest abschnittsweise eine kurvenförmige Form auf. Zwischen den zumindest abschnittsweise parallel zueinander angeordneten Wandungen der Führungsschiene kann ein Gegenstück, insbesondere ein als Gleitstück ausgebildetes Gegenstück, das beispielsweise an einer Begrenzungsfläche eines Akkumulators angeordnet ist, geführt werden. Die zu erreichende Endposition, um einen sicheren Halt des Akkumulators in der Aussparung des Unterrohres zu gewährleisten, kann durch eine endständige Verbindung der Wandungen zueinander gegeben sein. Durch die endständige Verbindung weist eine Führungsschiene eine U-förmige Form auf. Die Führung zwischen den Wandungen der Führungsschiene verhindert ein seitliches Verrutschen des Gegenstückes. In seiner Endposition ist der Akkumulator zwischen den Führungsschienen und der Anlegekante verklemmt. Durch die spielfreie Aufnahme des Akkumulators ist eine Geräuschbildung während des Fahrtbetriebes im aufgenommenen Zustand ausgeschlossen.

In einer Weiterbildung weist der Fahrzeugrahmen zwei Begrenzungsflächen auf und das Rahmenrohr weist zwei zwischen den Begrenzungsflächen angeordnete Anlegekanten zur Anlage des Energiespeichers auf. Die Anlegekanten können beispielsweise durch die Kanten des Rahmenrohres, die die Aussparung zur Aufnahme eines Akkumulators abschnittsweise begrenzen, ausgebildet sein. Vorzugsweise sind die Anlegekanten annähernd parallel zur äußeren Kontur des Rahmenrohres ausgebildet. Zur Aufnahme eines Energiespeichers, insbesondere eines Akkumulators, kann dieser an einer Anlegekante angelegt werden, so dass die Gegenstücke an den Stirnseiten des Akkumulators, die beispielsweise als Vorsprünge ausgebildet sein können, in die Führungsschienen der Stirnseiten der Aussparung fassen. Durch ein Verschwenken des Akkumulators um die Anlegekante in Richtung des Unterrohres wird die freistehende Längskante des Akkumulators mit der freien Anlegekante des Unterrohres, an der der Akkumulator nicht angelegt ist, in Anlage gebracht. Durch die Führung mittels der Führungsschiene beschreiben Abschnitte des Akkumulators hierbei eine kurvenförmige Bahn. In seiner Endposition ist der Akkumulator zumindest abschnittsweise zwischen den Anlegekanten des Unterrohres angeordnet. Durch das Anlegen an der Anlegekante und das Verschwenken des Akkumulators auf einer kurvenförmigen Bahn kann ein besonders hoher Anpressdruck des Akkumulators an die Anlegekante erzeugt werden, so dass der Akkumulator zwischen der Anlegekante und den Führungsschienen verklemmt ist. Durch den hohen Anpressdruck des Akkumulators an die Anlegekante und die spielfreie Verklemmung ist ein Verrutschen des Akkumulators auch bei dem Befahren eines sehr unebenen Geländes ausgeschlossen. Eine störende Geräuschbildung, beispielsweise von Klappergeräuschen aufgrund einer Relativbewegung des Akkumulators zum Fahrradrahmen, ist ausgeschlossen.

In einer Weiterbildung der Erfindung weist das Rahmenrohr einen flächig ausgebildeten Bereich zwischen den Anlegekanten auf. Beispielsweise kann durch den flächig ausgebildeten, zwischen den Anlegekanten angeordneten Bereich das Volumen des Unterrohres zumindest abschnittsweise begrenzt sein. Der flächige Bereich ist so zwischen den Anlegekanten und den Stirnseiten der Aussparung angeordnet, dass durch den flächig ausgebildeten Bereich das ausgesparte Volumen des Unterrohres einseitig begrenzt wird. Vorzugsweise sind dabei jeweils mindestens eine Außenkante der die Aussparung begrenzenden Stirnseiten parallel zu dem flächigen Bereich angeordnet. Insbesondere kann eine Außenwandung des Akkumulators im aufgenommenen Zustand parallel zu dem flächigen Bereich angeordnet sein. Beispielsweise kann an dem flächig ausgebildeten Bereich des Rahmenrohres eine Kontaktierungseinrichtung zur elektrischen Kontaktierung des Akkumulators angeordnet sein. Der Kontakt zwischen der Kontaktierungseinrichtung und dem Akkumulator kann in der Endstellung des Akkumulators hergestellt sein.

In einer Weiterentwicklung der Erfindung weist zumindest eine Begrenzungsfläche eine Rasteinrichtung zur Herstellung einer Rastverbindung zu einem Energiespeicher auf. Die Rasteinrichtung kann beispielsweise durch ein federnd gelagertes Bauteil eine Rastnase ausbilden. Der Energiespeicher, insbesondere der Akkumulator, kann vorzugsweise an einer seiner Stirnseiten eine Vertiefung aufweisen, in die das federnd gelagerte Bauteil, insbesondere die Rastnase, in der aufgenommenen Endstellung des Akkumulators hineinfasst. Durch die Herstellung einer Rastverbindung zwischen dem Akkumulator und dem Rahmenrohr ist eine zusätzliche Sicherung des Akkumulators gegen ein unbeabsichtigtes Entfernen des Akkumulators aus dem Fahrzeugrahmen gegeben.

In einer Weiterbildung der Erfindung ist die Rasteinrichtung zwischen den Wandungen mindestens einer Führungsschiene angeordnet. Die Rasteinrichtung, mit beispielsweise einem federnd gelagerten Rastelement, kann zwischen den Wandungen einer Führungsschiene angeordnet sein, so dass eine Rastverbindung zu einem Gegenstück eines Akkumulators, das zwischen den Wandungen geführt wird, hergestellt werden kann. Hierzu kann ein Gegenstück beispielsweise eine Vertiefung aufweisen, in die das Rastelement hineinfasst, um eine Rastverbindung herzustellen.

In einer weiteren konstruktiven Weiterentwicklung der Erfindung ist die Rasteinrichtung als ein zumindest abschnittsweise elastisch ausgebildetes Rastelement ausgebildet. Bei dem elastischen Rastelement kann es sich beispielsweise um ein Bauteil aus Federstahl oder ähnlichem handeln. Das Rastelement kann beispielsweise während des Eindrehvorgangs des Energiespeichers durch ein an dem Energiespeicher angeordnetes Gegenstück in eine Vertiefung der Begrenzungsfläche der Aussparung gedrückt werden. Im aufgenommenen Zustand kann das Rastelement, insbesondere eine Rastnase, in eine Vertiefung des Akkumulators fassen, so dass eine Rastverbindung hergestellt ist. Vorzugsweise ist dabei das Rastelement lammellenartig ausgebildet und weist eine einseitige Verbindung zu der Stirnseite des Rahmenrohres auf, so dass eine flexible bzw. federnde Lagerung des Rastelementes gegeben ist.

In einer weiteren konstruktiven Weiterbildung der Erfindung ist mindestens eine Begrenzungsfläche als ein mit dem Fahrzeugrahmen verbundenes Bauteil ausgebildet. Die Bauteile können vorzugsweise flächig ausgebildet sein. Vorzugsweise werden die Bauteile mittels Verschraubungen mit dem Rahmenrohr des Fahrzeugrahmens verbunden. Auch weitere Verbindungsmöglichkeiten, wie beispielsweise Clipverbindungen, Rastverbindungen oder Klebeverbindungen sind möglich. Vorzugsweise bestehen die Bauteile aus Kunststoff, wodurch eine besonders einfache und kostengünstige Fertigung der Bauteile ermöglicht ist. Insbesondere lassen sich bei Kunststoffbauteilen die angeordneten Führungsschienen leicht in das Bauteil einformen.

In einer Weiterbildung der Erfindung weist das Rahmenrohr zumindest eine Schließeinrichtung auf und die Schließeinrichtung weist mindestens einen Schließriegel auf. Die Schließeinrichtung kann beispielsweise als ein Schließzylinder mit einem zugeordneten Schließriegel ausgebildet sein. Die Schließeinrichtung kann dabei so angeordnet sein, dass ein Verriegeln des in die Aussparung aufgenommenen Energiespeichers, insbesondere eines Akkumulators, durch den Schließriegel ermöglicht ist. Somit kann der sich an einem Rahmenrohr befindliche Akkumulator gegen eine ungewollte Entnahme, insbesondere gegen Diebstahl, gesichert werden. Beispielsweise kann die Schlüsselöffnung des Schließzylinders seitlich an dem Unterrohr angeordnet sein, so dass eine einfache Bedienung durch den Benutzer ermöglicht ist.

In einer konstruktiven Weiterbildung der Erfindung weist mindestens eine Begrenzungsfläche mindestens eine Öffnung zum Durchlass eines Schließriegels auf. Durch die Öffnung kann ein Schließriegel, vorzugsweise senkrecht zur Ebene der Begrenzungsfläche, durch die Begrenzungsfläche hindurchgeführt werden. Durch den durchtretenden Schließriegel kann beispielsweise ein zu den Begrenzungsflächen in Anlage gebrachter Akkumulator gesichert werden. Dazu kann der Akkumulator eine Öffnung, in die der Schließriegel fassen kann, aufweisen. Ebenfalls ist es möglich, dass der Akkumulator an seiner entsprechenden Stirnseite einen Vorsprung aufweist und der Schließriegel im geschlossenen Zustand diesen blockiert und somit eine Entnahme des Akkumulators verhindert ist.

In einer bevorzugten Ausführungsform der Erfindung handelt es sich bei dem eine Aussparung aufweisenden Rahmenrohr um ein Unterrohr. Die Aufnahme des Energiespeichers in das Unterrohr eines Fahrradrahmens ist im besonderen Maße vorteilhaft, da das Unterrohr besonders stabil ausführbar ist und eine besonders einfache Entnahme des Akkumulators gegeben ist.

Weiterhin betrifft die Erfindung einen Energiespeicher für einen erfindungsgemäßen Fahrzeugrahmen, wobei der Energiespeicher mindestens zwei Stirnseiten aufweist, und mindestens eine Stirnseite mindestens ein Gegenstück zur Führung in einer Führungsschiene des Fahrzeugrahmens aufweist, bei dem erfindungswesentlich vorgesehen ist, dass mindestens ein Gegenstück zumindest abschnittsweise eine kurvenförmige Form aufweist. Ein Energiespeicher kann beispielsweise als ein Akkumulator ausgebildet sein. Der Energiespeicher weist zwei Stirnseiten auf, auf denen Gegenstücke zur Einführung in die Führungsschienen des Fahrradrahmens angeordnet sind. Die Führungsschienen können an den Begrenzungsflächen einer zur Aufnahme des Energiespeichers vorgesehen Aussparung des Fahrradrahmens angeordnet sein. Durch Anlage, beispielsweise einer Längskante des Energiespeichers an eine Anlegekante des Fahrradrahmens kann ein Gegenstück des Energiespeichers in die Führungsschiene des Fahrradrahmens eingefügt werden. Geführt durch die Führungsschienen wird der Energiespeicher in die Aussparung im Rahmenrohr eingeschwenkt und zwischen Anlegekante und Führungsschiene verklemmt bzw. verspannt. Somit ist eine spielfreie Aufnahme des Energiespeichers in das Rahmenrohr gegeben.

Mindestens ein Gegenstück weist zumindest abschnittsweise eine kurvenförmige Form auf. Die Führungsschienen des Fahrradrahmens können eine kurvenförmige Form aufweisen, so dass durch eine angepasste kurvenförmige Form der Gegenstücke eine sichere Führung gewährleistet ist.

Ein Ausführungsbeispiel der Erfindung, aus dem sich weitere erfinderische Merkmale ergeben, ist in der Zeichnung dargestellt. Es zeigen:
- Figur 1:: eine schematische Darstellung eines Fahrrades mit einem erfindungsgemäßen Fahrzeugrahmen und einem zugehörigen Energiespeicher;
- Figur 2:: eine schematische Darstellung eines erfindungsgemäßen Fahrzeugrahmens mit einem zugehörigen Energiespeicher im angelegten Zustand;
- Figur 3:: eine schematische Darstellung eines erfindungsgemäßen Fahrzeugrahmens mit einem zugehörigen, in das Rahmenrohr aufgenommenen Energiespeicher;
- Figur 4:: eine schematische Teilansicht der Aussparung des Rahmenrohres und
- Figur 5:: eine schematische Darstellung eines Akkumulators zur Aufnahme in das Rahmenrohr.

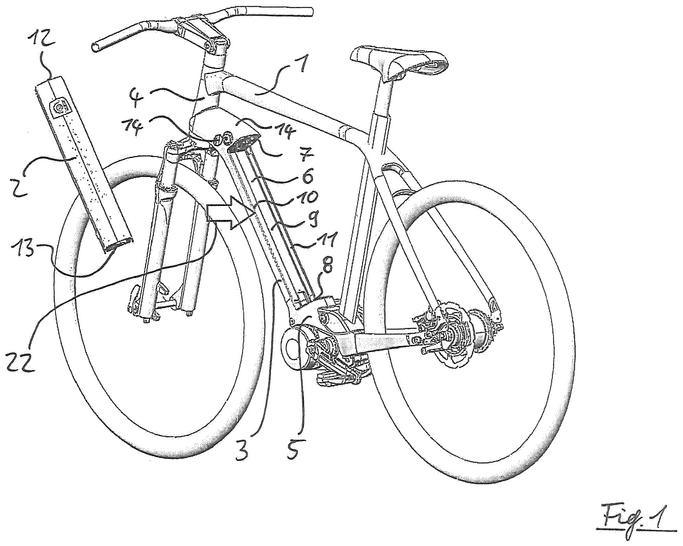

In Figur 1 ist ein erfindungsgemäßer Fahrzeugrahmen, insbesondere ein Fahrradrahmen 1 mit einem zugehörigen als Akkumulator ausgebildeten Energiespeicher 2 dargestellt. Der Fahrradrahmen 1 weist ein Rahmenrohr 3, insbesondere ein Unterrohr auf, das eine Verbindung zwischen dem Steuerrohr 4 und dem Tretlagergehäuse 5 darstellt. Das Rahmenrohr 3 weist eine Aussparung 6 auf, die von den Begrenzungsflächen 7 und 8 abschnittsweise begrenzt ist. Zwischen den Begrenzungsflächen 7, 8 weist das Rahmenrohr 3 einen flächig ausgebildeten Bereich 9 auf. Parallel zu dem Bereich 9 sind die Anlegekanten 10, 11 angeordnet. Der im nicht eingebauten Zustand dargestellte Energiespeicher 2 weist zwei Stirnseiten 12, 13 auf. Des Weiteren weist das Rahmenrohr 3 eine Schließeinrichtung 14 zur Verriegelung des Energiespeichers 2 im eingebauten Zustand auf. Die Position zur Aufnahme des Energiespeichers 2 in das Rahmenrohr 3 ist durch den Pfeil 22 verdeutlicht.

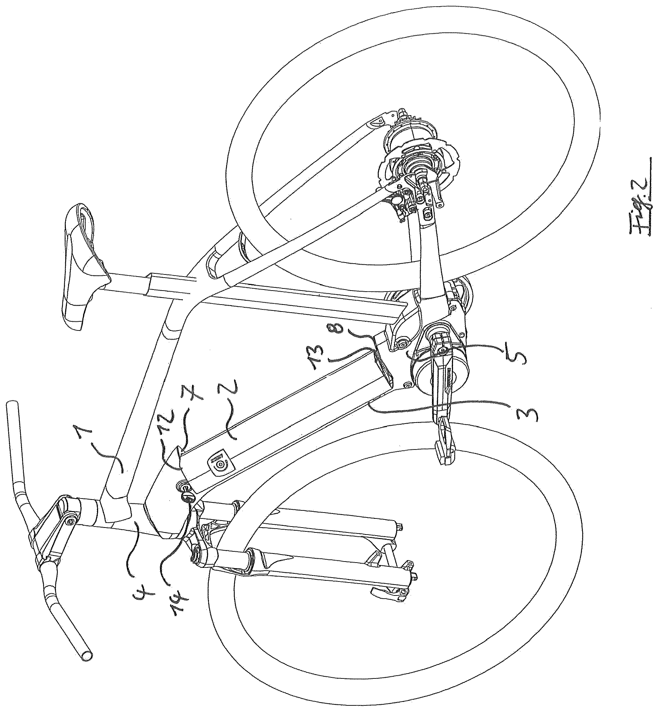

In Figur 2 ist ein erfindungsgemäßer Fahrradrahmen 1 gemäß Figur 1 mit einem Energiespeicher 2 im angelegten Zustand dargestellt. Gleiche Bauteile sind mit gleichen Bezugszeichen versehen. In dem dargestellten Zustand ist der Energiespeicher 2 an eine Anlegekante 10 des Rahmenrohres 3 angelegt. Durch ein Verschwenken des Energiespeichers 2 in Richtung der Anlegekante 11 wird der Energiespeicher 2 in den aufgenommenen Zustand gebracht.

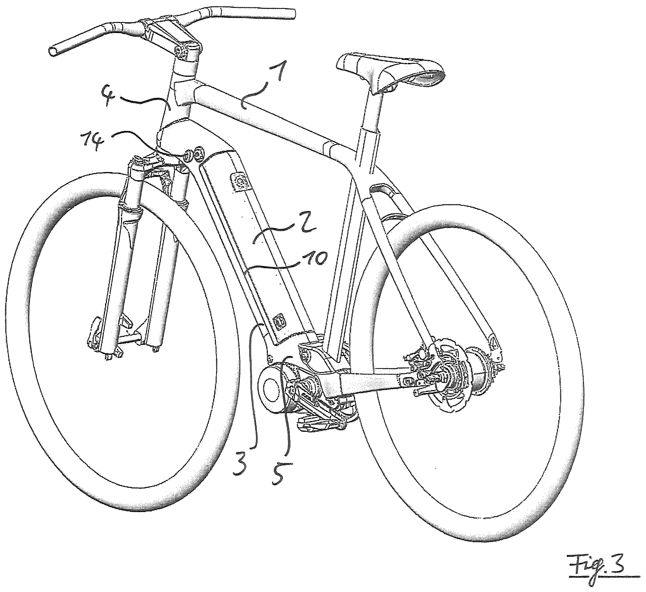

In Figur 3 ist der erfindungsgemäße Fahrradrahmen 1 gemäß Figur 1 und 2 mit einem aufgenommenen Energiespeicher 2 dargestellt. Der Energiespeicher 2 ist in die Aussparung 6 des Fahrradrahmens 1 aufgenommen. Durch die Anlage an die Anlegekante 10 kann beim Einschwenken des Energiespeichers 2 ein besonders hoher Anpressdruck gewährleistet werden, so dass eine Bewegung des Energiespeichers 2 in Relation zum Rahmenrohr 3 auch bei Fahrten über unebenes Gelände ausgeschlossen ist. Der in die Aussparung 6 aufgenommene Energiespeicher 2 fügt sich formschlüssig in das Rahmenrohr 3 ein, so dass das optische Erscheinungsbild des Fahrradrahmens 1 nicht durch den Energiespeicher 2 negativ beeinflusst wird.

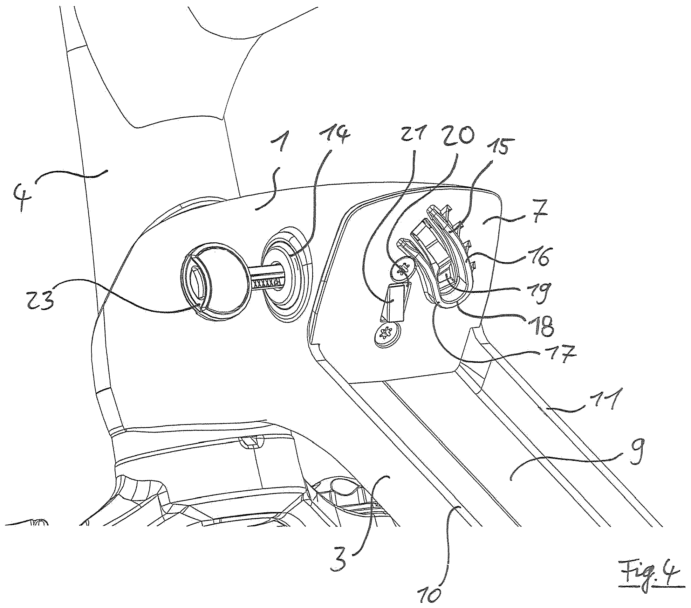

In Figur 4 ist die Aussparung 6 mit einer Begrenzungsfläche 7 des Rahmenrohres 3 in einer Teilansicht dargestellt. Die Begrenzungsfläche 7 weist einen als Führungsschiene 15 ausgebildeten Klemmvorsprung auf. Die Führungsschiene 15 ist aus seitlichen Wandungen 16, 17 ausgebildet, die eine endständige Verbindung 18 aufweisen. Die Führungsschiene 15 mit den seitlichen Wandungen 16, 17 weist eine kurvenförmige Form auf. Durch die Führungsschiene 15 kann ein Gegenstück 24 an einem Energiespeicher 2 nach dem Anlegen an einer Anlegekante 10 kurvenförmig in die aufgenommene Position des Energiespeichers 2 geführt werden. Des Weiteren weist die Begrenzungsfläche 7 ein Rastelement 19 auf, das zur Herstellung einer Rastverbindung zu dem Energiespeicher 2 vorgesehen ist. Dazu ist das Rastelement 19 federnd gelagert, so dass es bei der Führung eines Gegenstückes 24 des Energiespeichers 2 zwischen den Wandungen 16, 17 der Führungsschiene 15 zurückschwenkt, um mit einer Vertiefung 25 im Energiespeicher 2 zu verrasten. Weiterhin weist die Begrenzungsfläche 7 eine Öffnung 20 zur Durchführung eines Schließriegels 21 auf. Der Schließriegel 21 ist mit einer Schließeinrichtung 14 verbunden, die durch einen Schlüssel 23 bedienbar ist. Im aufgenommenen Zustand des Energiespeichers 2 kann der Schließriegel 21 durch die Schließeinrichtung 14 in einen verriegelnden Zustand gebracht werden, wobei der Schließriegel 21 hinter einen Vorsprung 26 des Energiespeichers 2 fasst und diesen blockiert. Ein ungewolltes Entnehmen des Energiespeichers 2 aus dem Rahmenrohr 3 ist somit ausgeschlossen. Die Anlegekanten 10 und 11 bilden einen Überstand über den flächigen Bereich 9 des Rahmenrohres 3. Zwischen diesen Anlegekanten 10, 11 ist der Energiespeicher 2 abschnittsweise aufgenommen und zudem ist der Energiespeicher 2 zwischen der Anlegekante 10 und der Führungsschiene 15 verklemmt, wodurch eine besonders gute Sicherung des Energiespeichers 2 gegen Bewegungen in Relation zum Rahmenrohr 3 gegeben ist.

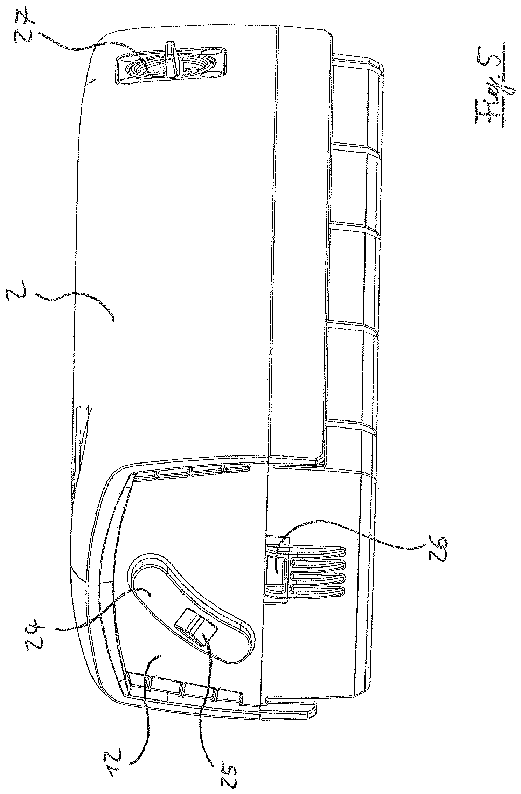

In Figur 5 ist ein Energiespeicher 2 zur Aufnahme in ein Rahmenrohr 3 eines erfindungsgemäßen Fahrradrahmens 1 dargestellt. Der Energiespeicher 2 weist zwei Stirnseiten 12, 13 auf. Die Stirnseite 12 weist ein Gegenstück 24 auf, das als ein kurvenförmig geformter Vorsprung ausgebildet ist. Das Gegenstück 24 weist eine Vertiefung 25 auf, in die das Rastelement 19 des Fahrradrahmens 1 im aufgenommenen Zustand des Energiespeichers 2 fassen kann. Des Weiteren weist die Stirnseite 12 einen Vorsprung 26 auf, der im aufgenommenen Zustand des Energiespeichers 2 durch den Schließriegel 21 blockiert werden kann. Durch das Zusammenwirken von dem Schließriegel 21 und dem Vorsprung 26 ist eine ungewollte Entnahme des Energiespeichers 2 aus dem Unterrohr 3 ausgeschlossen. Seitlich ist an dem Energiespeicher 2 ein Abdeckelement 27 angeordnet, unter dem ein Verbindungsstück für eine Stromversorgung zum Aufladen des Energiespeichers 2 angeordnet sein kann.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Fahrzeugrahmen, insbesondere Fahrradrahmen (1), mit Rahmenrohren, insbesondere mit einem Sitzrohr und einem Unterrohr (3), wobei mindestens ein Rahmenrohr (3) zumindest eine Halterung für mindestens einen Energiespeicher (2) aufweist, mindestens eine Halterung als eine Aussparung (6) mindestens eines Rahmenrohres (3) ausgebildet ist, das Rahmenrohr (3) mindestens eine, die Aussparung (6) zumindest abschnittsweise begrenzende, Begrenzungsfläche (7, 8) aufweist, das Rahmenrohr eine, die Aussparung (6) zumindest abschnittsweise begrenzende, Anlegekante aufweist, und mindestens eine Begrenzungsfläche (7, 8) mindestens einen Klemmvorsprung aufweist,
**dadurch gekennzeichnet,**
**dass** mindestens ein Klemmvorsprung als eine kurvenförmige Führungsschiene (15) zur kurvenförmigen Führung mindestens eines Gegenstückes (24) eines Energiespeichers ausgebildet ist.

2. Fahrzeugrahmen nach Anspruch 1, **dadurch gekennzeichnet, dass** mindestens eine Führungsschiene (15) zwei seitliche Wandungen (16, 17) aufweist, dass die Wandungen (16, 17) zumindest abschnittsweise parallel zueinander angeordnet sind, dass die Wandungen (16, 17) eine endständige Verbindung (18) zueinander aufweisen und dass die Wandungen (16, 17) zumindest abschnittsweise eine kurvenförmige Form aufweisen.

3. Fahrzeugrahmen nach einem der Ansprüche 1 oder 2, **dadurch gekennzeichnet, dass** das Rahmenrohr (3) zwei Begrenzungsflächen (7, 8) aufweist und dass das Rahmenrohr (3) zwei zwischen den Begrenzungsflächen (7, 8) angeordnete Anlegekanten (10, 11) zur Anlage des Energiespeichers (2) aufweist.

4. Fahrzeugrahmen nach Anspruch 3, **dadurch gekennzeichnet, dass** das Rahmenrohr (3) einen flächig ausgebildeten Bereich (9) zwischen den Anlegekanten (10, 11) aufweist.

5. Fahrzeugrahmen nach einem der Ansprüche 1 bis 4, **dadurch gekennzeichnet, dass** zumindest eine Begrenzungsfläche (7, 8) eine Rasteinrichtung zur Herstellung einer Rastverbindung zu einem Energiespeicher (2) aufweist.

6. Fahrzeugrahmen nach Anspruch 5, **dadurch gekennzeichnet, dass** die Rasteinrichtung zwischen den Wandungen (16, 17) mindestens einer Führungsschiene (15) angeordnet ist.

7. Fahrzeugrahmen nach einem der Ansprüche 5 oder 6, **dadurch gekennzeichnet, dass** die Rasteinrichtung als ein, zumindest abschnittsweise elastisch ausgebildetes, Rastelement (19) ausgebildet ist.

8. Fahrzeugrahmen nach einem der Ansprüche 1 bis 7, **dadurch gekennzeichnet, dass** mindestens eine Begrenzungsfläche (7, 8) als mindestens ein mit dem Fahrzeugrahmen (1) verbundenes Bauteil ausgebildet ist.

9. Fahrzeugrahmen nach einem der Ansprüche 1 bis 8, **dadurch gekennzeichnet, dass** das Rahmenrohr (3) zumindest eine Schließeinrichtung (14) aufweist und dass die Schließeinrichtung (14) mindestens einen Schließriegel (21) aufweist.

10. Fahrzeugrahmen nach Anspruch 9, **dadurch gekennzeichnet, dass** mindestens eine Begrenzungsfläche (7, 8) mindestens eine Öffnung (20) zum Durchlass eines Schließriegels (21) aufweist.

11. Fahrzeugrahmen nach einem der Ansprüche 1 bis 10, **dadurch gekennzeichnet, dass** es sich bei dem eine Aussparung (6) aufweisenden Rahmenrohr (3) um ein Unterrohr handelt.

12. Energiespeicher für einen Fahrzeugrahmen nach einem der Ansprüche 1 bis 11, wobei der Energiespeicher (2) mindestens zwei Stirnseiten (12, 13) aufweist und mindestens eine Stirnseite (12, 13) mindestens ein Gegenstück (24) zur Führung in einer kurvenförmigen Führungsschiene (15) des Fahrzeugrahmens (1) aufweist,
**dadurch gekennzeichnet,**
**dass** mindestens ein Gegenstück (24) zumindest abschnittsweise eine kurvenförmige Form aufweist.

## Claims

1. Vehicle frame, in particular bicycle frame (1), with frame tubes, in particular with a seat tube and a down tube (3), wherein at least one frame tube (3) has at least one holder for at least one energy store (2), at least one holder has the form of a recess (6) in at least one frame tube (3), the frame tube (3) has at least one boundary surface (7, 8) which delimits at least a portion of the recess (6), the recess has a support edge which delimits at least a portion of the recess (6), and at least one boundary surface (7, 8) has a clamping projection,
**characterized in that** at least one clamping projection is designed as a curved guide rail (15) for the curved guidance of at least one matching part (24) of an energy store.

2. Vehicle frame according to Claim 1, **characterized in that** at least one guide rail (15) has two lateral walls (16, 17), at least sections of the walls (16, 17) are arranged parallel to one another, the walls (16, 17) form a terminal connection (18) with each other, and at least sections of the walls (16, 17) have a curved shape.

3. Vehicle frame according to either one of Claims 1 or 2, **characterized in that** the frame tube (3) has two boundary surfaces (7, 8) and that the frame tube (3) has two support edges (10, 11) arranged between the boundary surfaces (7, 8) for supporting the energy store (2).

4. Vehicle frame according to Claim 3, **characterized in that** the frame tube (3) has a flat area (9) between the support (10, 11).

5. Vehicle frame according to any one of Claims 1 to 4, **characterized in that** at least one boundary surface (7, 8) has a detent device for creating a snap-in connection with an energy store (2).

6. Vehicle frame according to Claim 5, **characterized in that** the detent device is arranged between the walls (16, 17) of at least one guide rail (15).

7. Vehicle frame according to either one of Claims 5 or 6, **characterized in that** at least a portion of the detent device is embodied as an elastically formed engaging element (19).

8. Vehicle frame according to any one of Claims 1 to 7, **characterized in that** at least one boundary surface (7, 8) is embodied as at least one component which is connected to the vehicle frame (1).

9. Vehicle frame according to any one of Claims 1 to 8, **characterized in that** the frame tube (3) has at least one closing device (14) and that the closing device (14) includes at least one locking bolt (21).

10. Vehicle frame according to Claim 9, **characterized in that** at least one boundary surface (7, 8) has at least one opening (20) to allow a locking bolt (21) to pass through.

11. Vehicle frame according to any one of Claims 1 to 10, **characterized in that** the frame tube (3) having a recess (6) is a down tube.

12. Energy store for a vehicle frame according to any one of Claims 1 to 11,
wherein the energy store (2) has at least two end faces (12, 13), and at least one end face (12, 13) has at least one matching part (24) for guiding in a curved guide rail (15) of the vehicle frame (1),
**characterized in that** at least a section of at least one matching part (24) has a curved shape.

## Revendications

1. Châssis de véhicule, notamment cadre de vélo (1), comportant des tubes de cadre, notamment avec un tube d'assise et un tube inférieur (3), dans lequel au moins un tube de cadre (3) présente au moins un support pour au moins un accumulateur d'énergie (2), au moins un support est conçu comme une cavité (6) d'au moins un tube de cadre (3), le tube de cadre (3) présente au moins une surface de délimitation (7,8) délimitant la cavité (6) au moins par portions, le tube de cadre présente une arête de positionnement délimitant au moins par portions la cavité (6) et au moins une surface de délimitation (7,8) présente au moins une protubérance de serrage, **caractérisé en ce que** au moins une protubérance de serrage est configurée comme un rail de guidage (15) curviligne pour le guidage curviligne d'au moins une contre pièce (24) d'un accumulateur d'énergie.

2. Châssis de véhicule selon la revendication 1, **caractérisé en ce que** au moins un rail de guidage (15) présente deux parois latérales (16,17), **en ce que** les parois (16,17) sont disposées au moins par portions parallèlement les unes aux autres, **en ce que** les parois (16,17) présentent une liaison de terminaison (18) l'une par rapport à l'autre et **en ce que** les parois (16,17) présentent une forme curviligne au moins par portions.

3. Châssis de véhicule selon une des revendications 1 ou 2, **caractérisé en ce que** le tube de cadre (3) présente deux surfaces de délimitation (7,8) et **en ce que** le tube de cadre (3) présente deux arêtes de positionnement (10,11) disposées entre les surfaces de délimitation (78,8) pour repositionner l'accumulateur d'énergie (2).

4. Châssis de véhicule selon la revendication 3, **caractérisé en ce que** le tube de cadre (3) présente une zone (9) à configuration plate entre les arêtes de positionnement (10,11).

5. Châssis de véhicule selon une des revendications 1 à 4, **caractérisé en ce que** au moins une surface de délimitation (7,8) présente un dispositif d'encliquetage pour établir une liaison par encliquetage avec un accumulateur d'énergie (2).

6. Châssis de véhicule selon la revendication 5, **caractérisé en ce que** le dispositif d'encliquetage est disposé entre les parois (16,17) d'au moins un rail de guidage (15).

7. Châssis de véhicule selon une des revendications 5 ou 6, **caractérisé en ce que** le dispositif d'encliquetage est configuré comme un élément d'encliquetage (19), conçu élastiquement au moins par portions.

8. Châssis de véhicule selon une des revendications 1 à 7, **caractérisé en ce que** au moins une surface de délimitation (7,8) est configurée comme au moins un composant relié avec le châssis de véhicule (1).

9. Châssis de véhicule selon une des revendications 1 à 8, **caractérisé en ce que** le tube de cadre (3) présente au moins un dispositif de fermeture (14) et **en ce que** le dispositif de fermeture (14) présente au moins un pêne de verrouillage (21).

10. Châssis de véhicule selon la revendication 9, **caractérisé en ce que** au moins une surface de délimitation (7,8) présente au moins une ouverture (20) pour le passage d'un pêne de verrouillage (21).

11. Châssis de véhicule selon une des revendications 1 à 10, **caractérisé en ce que** le tube de cadre (3) présentant une cavité (6) consiste en un tube inférieur.

12. Accumulateur d'énergie pour un châssis de véhicule selon une des revendications 1 à 11, dans lequel l'accumulateur d'énergie (2) présente au moins deux côtés frontaux (12,13) et au moins un côté frontal (12,13) présente au moins une contre pièce (24) pour le guidage dans un rail de guidage curviligne (15) du châssis de véhicule (1), **caractérisé en ce que** au moins une contre pièce (24) présente au moins par portions une forme curviligne.
